Europäisches Patentamt

European Patent Office

Office européen des brevets

(19)

(11) Numéro de publication: **0 299 813**

**A1**

# DEMANDE DE BREVET EUROPEEN

(12)

(21) Numéro de dépôt: **88401461.4**

(22) Date de dépôt: **14.06.88**

(51) Int. Cl.⁴: **G 01 T 1/29**

(30) Priorité: **19.06.87 FR 8708650**

(43) Date de publication de la demande:
**18.01.89 Bulletin 89/03**

(84) Etats contractants désignés: **DE NL**

(71) Demandeur: **THOMSON-CSF**
**173, Boulevard Haussmann**
**F-75379 Paris Cédex 08 (FR)**

(72) Inventeur: **Maillot, Christian**
**Thomson-CSF SCPI-19, avenue de Messine**
**F-75008 Paris (FR)**

**Ayral, Jean-luc**
**Thomson-CSF SCPI-19, avenue de Messine**
**F-75008 Paris (FR)**

**Costard, Eric**
**Thomson-CSF SCPI-19, avenue de Messine**
**F-75008 Paris (FR)**

(74) Mandataire: **Turlèque, Clotilde et al**
**THOMSON-CSF SCPI 19, avenue de Messine**
**F-75008 Paris (FR)**

(54) **Système de visualisation à mémoire à sensibilisation préalable, et procédé mettant en oeuvre ce système.**

(57) L'invention concerne un système d'imagerie à mémoire comprenant une couche (20) d'un matériau luminophore capable de stocker une image transportée par un faisceau (F1) et de la restituer, sous la forme d'un faisceau (F3), sous la commande d'une excitation électrique fournie par des électrodes (23, 24). Une source de rayonnement (10) éclaire la couche (20) de matériau luminophore avant enregistrement d'une image et permet de sensibiliser la couche de matériau luminophore.

FIG_1

EP 0 299 813 A1

## Description

### SYSTEME DE VISUALISATION A MEMOIRE A SENSIBILISATION PREALABLE ET PROCEDE METTANT EN OEUVRE CE SYSTEME

L'invention concerne un système de visualisation à mémoire à sensibilisation préalable et notamment un système utilisant une plaque scintillatrice à mémoire stimulable électriquement. L'invention est plus particulièrement applicable à l'imagerie à rayons X.

Plus précisément, l'invention concerne un système et un procédé permettant d'améliorer les performances du système d'imagerie radiologique décrit dans la demande de brevet français N° 86. 02876 déposée le 28 février 1986 et concernant un "Système de visualisation à mémoire". Une présensibilisation de la plaque scintillatrice à mémoire stimulable électriquement multiplie en effet, par un facteur 10 à 20 le facteur de conversion photons X/photons visibles de cette plaque à mémoire.

La demande de brevet citée précédemment décrit un système d'imagerie radiologique dont le principe de fonctionnement repose sur une plaque scintillatrice à mémoire stimulable électriquement. Cette plaque composée d'une poudre scintillatrice incluse dans un liant et placée entre deux électrodes, dont l'une au moins est transparente, est capable de stocker une image radiologique puis de la restituer lors de l'application d'une tension entre les deux électrodes.

La stimulation électrique de la lumière a été observée pour la première fois par Güdden et Pohl. On trouvera une description de l'art connu dans le document IVEY "Field Effect in Excited Phospho rs" de Electroluminescence and Related Effects page 182 - Academ ic Press de 1963. Depuis cette date, un modèle expliquant l'effet Güdden et Pohl a été proposé par Proskura dans le document "Participation of the recombination barrier in the storage of excitation by ZnS : Cu crystal phosphor" publié dans Opt. Spectrosc. (USSR), vol. 42, N° 6, pages 645 de 1977. Nos résultats expérim aux confirment ses hypothèses.

Dans ce modèle, en effet, les pièges responsables de l'effet Güdden et Pohl sont identifiés comme étant les centres recombinants radiatifs se trouvant localisés près de la surface du grain scintillateur. Plus exactement, il existe à la surface des scintillateurs semiconducteurs une zone morte ne présentant pas de fluorescence sous rayonnement. Dans cette zone, on observe un déficit en porteurs majoritaires. Cette déplétion diminue le nombre de recombinaisons radiatives avec les porteurs minoritaires piégés dans les centres recombinants se trouvant près de la surface tel que cela est décrit dans l'article "Measurement of diffusion lengths in direct-gap semiconductors by electron beam excitation" de Wittry et Kyser publié dans Journal of Applied Physics, vol. 38, page 375, 1967.

L'application d'un champ électrique aux bornes de la structure a pour effet de diminuer la largeur de la zone déplétée provoquant par là même un nombre important de transitions radiatives détectées sous la forme d'un flash lumineux. C'est cet effet que nous exploitons dans la demande de brevet français N° 86.02876.

L'intensité de l'effet Güdden-Pohl dépend donc de la largeur de la zone déplétée à l'intérieur de chaque grain scintillateur. On a observé que l'intensité du flash Güdden-Pohl dépend de "l'histoire" antérieure de la plaque scintillatrice. En effet, cette intensité est beaucoup plus faible lorsque l'échantillon a été maintenu un temps important (quelques heures) dans l'obscurité avant irradiation X.

La largeur de la zone déplétée est contrôlée par la densité de charges présente à la surface. Cette densité diminue lorsqu'on laisse l'échantillon dans l'obscurité et augmente sous irradiation.

Il apparaît donc nécessaire de pouvoir contrôler et si possible augmenter cette zone déplétée afin d'améliorer les performances de la plaque scintillatrice. Ce contrôle nous oblige donc à introduire une étape supplémentaire dont le but est de préparer la plaque scintillatrice en élargissant la zone déplétée.

Nous proposons donc un système et un procédé permettant de sensibiliser la plaque scintillatrice et d'obtenir ainsi un gain d'inten sité et un meilleur contrôle du phénomène physique.

Il faut remarquer que ce procédé ne peut en aucune façon être comparé à un simple effacement de la plaque à mémoire. Des imageurs à rayons X connus dans la technique utilisent une plaque scintillatrice à mémoire stimulable optiquement et une étape d'effacement optique ou thermique est incluse dans ces systèmes. Lors de cet effacement les pièges remplis lors de l'irradiation puis incomplètement vidés lors de la lecture de l'image mémorisée sont alors vidés totalement, optiquement ou thermiquement. On trouve la description d'un tel système dans la demande de brevet européen N° 0172.417.

Notre procédé de sensibilisation a pour but au contraire d'augmenter le nombre de pièges disponibles pour mémoriser l'image et qui vont donc être remplis sous irradiation.

L'invention concerne donc un système de visualisation à mémoire comprenant
- une première source de rayonnement éclairant, avec un premier faisceau d'une longueur d'onde déterminée, un corps à explorer;
- un support sensible à ladite longueur d'onde recevant le faisceau retransmis par le corps, et comportant, d'une part, une couche d'un matériau luminophore capable de stocker une énergie, provenant dudit premier faisceau, dans des états métastables et de la libérer sous l'effet d'une excitation électrique, sous la forme d'un flux lumineux et, d'autre part, des moyens d'application de ladite excitation électrique au matériau luminophore;
- un dispositif optique de transmission recevant le flux lumineux et le retransmettant;
- un capteur recevant le flux lumineux retransmis par le dispositif optique de transmission et traduisant l'intensité du flux lumineux en signal électrique;

- un circuit de traitement recevant ledit signal électrique le traitant et commandant son affichage sur un dispositif de visualisation;

caractérisé en ce qu'il comporte en outre:

- une deuxième source de rayonnement émettant un deuxième faisceau éclairant la couche de matériau luminophore, la longueur d'onde de ce deuxième faisceau étant choisie pour créer des paires d'électrons-trous dans la couche de matériau luminophore;

- un circuit de commande CC émettant successivement les différents signaux de commande suivants :

- un premier signal qui est transmis à la deuxième source de rayonnement pour commander son fonctionnement;

- un troisième signal qui est transmis à la première source de rayonnement pour commander son fonctionnement

- un quatrième signal qui est transmis aux moyens d'application d'excitation électrique, au capteur et au circuit de traitement pour commander leurs fonctionnements respectifs

L'invention concerne également un procédé de sensibilisation d'un système de visualisation comportant une couche d'un matériau luminophore permettant de stocker une énergie provenant d'un premier faisceau et de la libérer sous l'effet d'une première excitation électrique d'un sens déterminé sous la forme d'un flux lumineux, caractérisé en ce qu'il comporte avant stockage de l'énergie provenant du premier faisceau une étape d'éclairement de la couche de matériau luminophore à l'aide d'un deuxième faisceau dont la longueur d'onde permet de créer des paires d'électrons-trous dans ladite couche.

Les différents objets et caractéristiques de l'invention apparaîtront plus clairement dans la description qui va suivre faite à titre d'exemple en se reportant aux figures annexées qui représentent:

- la figure 1, un schéma général du système de l'invention ;
- la figure 2, un exemple de réalisation du système de l'invention ;
- les figures 3 et 4, des vues particulières du système de la figure 2 ;
- les figures 5 à 8, différentes étapes du procédé de l'invention.

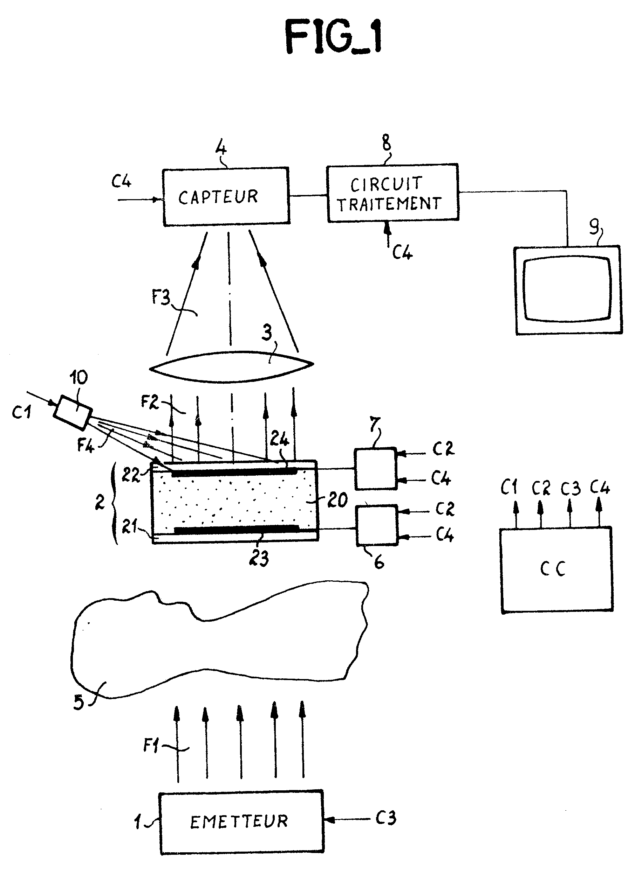

En se reportant à la figure 1, on va tout d'abord décrire un schéma général du système de l'invention.

Sur cette figure, on trouve un émetteur de rayonnement, par exemple un émetteur de rayons X, émettant un faisceau F1, vers un corps humain 5 dont on veut radiographier une partie. De l'autre côté du corps humain 5 par rapport à l'émetteur 1 se trouve un écran 2 ou plaque scintillatrice sensible au rayonnement émis par l'émetteur 1. Cet écran 2 contient un matériau luminophore 20 enserré par deux plaques 21 et 22 qui présente la propriété d'absorber l'énergie véhiculée par le faisceau F1.

L'écran 2 possède de part et d'autre du matériau luminophore et en contact avec lui, deux électrodes 23 et 24 qui sont disposées sur les plaques 21 et 22. Ces électrodes sont connectées à des sources de tension 6 et 7 qui permettent de porter les électrodes 23 et 24 à des niveaux de tension différents de façon à ce que le matériau 20 soit soumis à un champ électrique. Ce champ électrique a pour effet d'exciter le matériau luminophore et de libérer sous forme d'un flux lumineux F2, l'énergie accumulée lors de la réception du faisceau F1 de rayons X.

Le faisceau F2 est transmis à un dispositif de transmission optique telle qu'une lentille 3 qui retransmet un faisceau F3 à un capteur 4 qui traduit l'image véhiculée par le faisceau F2 en signaux électriques.

Les signaux électriques sont transmis à un circuit de traitement 8 qui commande l'affichage de l'image transmise sur un dispositif de visualisation 9.

Une source lumineuse 10 émet un faisceau lumineux F4 éclairant la lame 22 et de ce fait la couche 20 de matériau luminophore.

Selon l'exemple de la figure 1, la source 10 éclaire uniformément la lame 22. Selon d'autres exemples de réalisation, tels que ceux qui seront décrits ultérieurement, la source 10 peut être déplacée de façon à ce que le faisceau F4 exécute un balayage de la lame 22 et à ce que la couche 20 reçoive un éclairement uniforme.

Enfin, un circuit de commande CC fournit différents signaux de commande C1 à C4 qui sont transmis aux différents organes du système et qui seront décrits ultérieurement.

La plaque 21 et l'électrode 23 disposées du côté réception du faisceau F1 sont transparentes à la longueur d'onde du faisceau F1. Dans le cas d'un fonctionnement aux rayons X, ils laissent donc passer ces rayons de façon qui le matériau luminophore accumule de l'énergie.

La plaque 22 et l'électrode 24 sont transparentes au rayonnement lumineux émis pa le matériau luminophore sous l'effet d'une excitation électrique.

L'écran 2 est sensible à une énergie comprise entre quelques électrons-volts et plusieurs dizaines de kilo-électrons-volts (rayonnement visible, ultra-violet, X), voire même à plusieurs mégaélectrons-volts pour application en radiothérapie.

Le matériau luminophore 20 est enrobé d'un liant organique (polymère) ou inorganique (verre, céramique).

Les luminophores stimulables par un champ électrique sont capables, d'une part de stocker dans des états métastables de très longue durée de vie l'énergie absorbée provenant du rayonnement incident, d'autre part de libérer cette énergie sous forme de luminescence lorsque'un champ électrique est appliqué dans le matériau. L'énergie émise par luminescence est proportionnelle à l'énergie absorbée, c'est-à-dire au nombre de photons du rayonnement incident. L'énergie d'un photon émis est inférieure à celle d'un photon incident. En particulier, il est possible de restituer une image visible à partir d'un enregistrement en rayons X.

Comme on l'a vu précédemment, l'efficacité de l'écran 2 (ou plaque scintillatrice) à l'enregistrement d'une image est d'autant meilleure que la largeur de la zone déplétée de la plaque scintillatrice est grande.

La sensibilisation de la plaque scintillatrice s'effectue donc comme on l'a déjà décrit en augmentant la largeur de la zone déplétée. Pour cela, il nous faut augmenter la charge présente à la surface du grain. Nous avons observé qu'une forte illumination X ou UV a comme conséquence une augmentation de la charge présente en surface. Cet effet est renforcé par l'application d'impulsions de tension pendant l'éclairement. La première étape de la sensibilisation comporte donc un éclairement uniforme de la plaque sous un rayonnement dont la longueur d'onde est capable d'exciter la luminescence du matériau scintillateur. Pendant l'illumination, on applique à l'ensemble de la plaque des impulsions de tension dont la polarité peutk être positive, négative ou alternative.

Cette première étape a pour conséquence de remplir les pièges de surface augmentant la largeur de la zone déplétée et les pièges responsables de l'effet Güdden-Pohl. Il nous fait donc vider ces pièges avant de les remplir de nouveau sous illumination X. Pour cela, dans une deuxième étape nous continuons à appliquer à l'ensemble de la plaque les impulsions de tension alors qu'elle est maintenue dans l'obscurité.

L'ensemble de ce procédé permet de mettre la plaque dans un état de sensibilisation qui conduit à des performances très nettement supérieures. En effet, son rendement de conversion photons X - photons visible augmente d'un facteur environ 20.

De plus, la reproductibilité des résultats est très nettement améliorée. L'image ne dépend plus de "l'histoire" de la plaque scintillatrice et du temps passé dans l'obscurité. Il est à noter que la sensibilisation de la plaque est conservée plusieurs minutes et permet de réaliser plusieurs clichés successifs sans qu'existe la nécessité d'effectuer à nouveau le processus de sensibilisation.

Enfin, l'étape de sensibilisation impose au scintillateur une constante de déclin de phosphorescence la plus courte possible. Dans le cas contraire, la sensibilisation sous UV conduirait à un déclin lent de la phosphorescence, dont l'émission lumineuse viendrait s'ajouter à la luminescence stimulée électriquement et diminuerait ainsi le rapport signal à bruit intrinsèque à la plaque scintillatrice.

Dans ces conditions, le fonctionnement du système de la figure 1 est le suivant :
- le circuit de commande CC, sous la commande de moyens non représentés, émet un signal de commande C1 qui commande le fonctionnement de la source 10 et l'émission d'un faisceau F4 de rayonnement ultra-violet qui éclaire toute la plaque 22. La source 10 éclaire uniformément la plaque 22 ou bien effectue un balayage de la surface de la plaque 22 ;
- le circuit de commande CC commande également simultanément ou quasi-simultanément, par le signal de commande C2, le fonctionnement des circuits 6 et 7 qui appliquent un champ d'excitation aux électrodes 23 et 24 ;
- le signal de commande C1 cesse au terme d'un temps déterminé suffisant pour la sensibilisation du système et l'écran 2 se trouve dans l'obscurité ;
- le signal de commande C2 cesse ensuite également au terme d'un autre temps déterminé ;
- ensuite, le système est prêt à enregistrer une image. Le patient 5 à radiographier étant en place entre l'émetteur 1 et l'écran 2, le circuit de commande CC émet le signal de commande C3 qui commande le fonctionnement de l'émetteur 1. Celui-ci émet le faisceau F1 de rayonnement X et l'image du corps 5 est enregistrée par l'écran 2.

-Par la suite, sous la commande de moyens non représentés, le circuit de commande CC commande, par le signal C4, le fonctionnement des circuits 6 et 7 et l'application, par ceux-ci, d'un champ d'excitation à l'écran 2. Ce champ d'excitation est le même ou sensiblement le même que celui appliqué précédemment sous la commande du signal C1. Le signal C4 commande également le fonctionnement du capteur 4 qui reçoit le faisceau F3 résultant de l'excitation de l'écran 2. Le circuit de traitement 8 est également mis en fonctionnement par le signal C4 et traite le résultat de la détection du capteur 4 ce qui permettra par la suite d'afficher à volonté, sur le dispositif de visualisation 9, l'image radiographiée du corps 5.

Il est à noter que le système fonctionne également mais avec une moins grande efficacité si l'on ne commande pas, par le signal C2, le fonctionnement des circuits 6 et 7 et qu'on n'applique pas un champ d'excitation à l'écran 2 durant son éclairage par le faisceau F4.

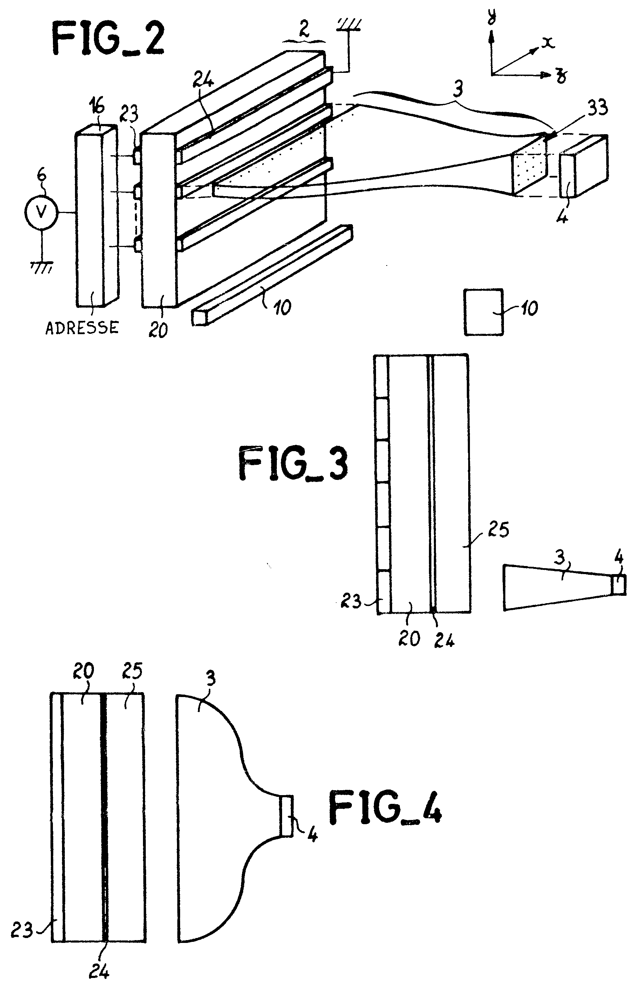

En se reportant aux figures 2 à 4 on va maintenant décrire des exemples de réalisation plus détaillés du système de l'invention.

Le système est composé principalement de trois parties :
- un écran 2 ou plaque scintillatrice à mémoire stimulable électriquement ;
- un capteur 4 ou détecteur de photons couplé optiquement à l'écran 2 ;
- un système de sensibilisation représenté par la source 10.

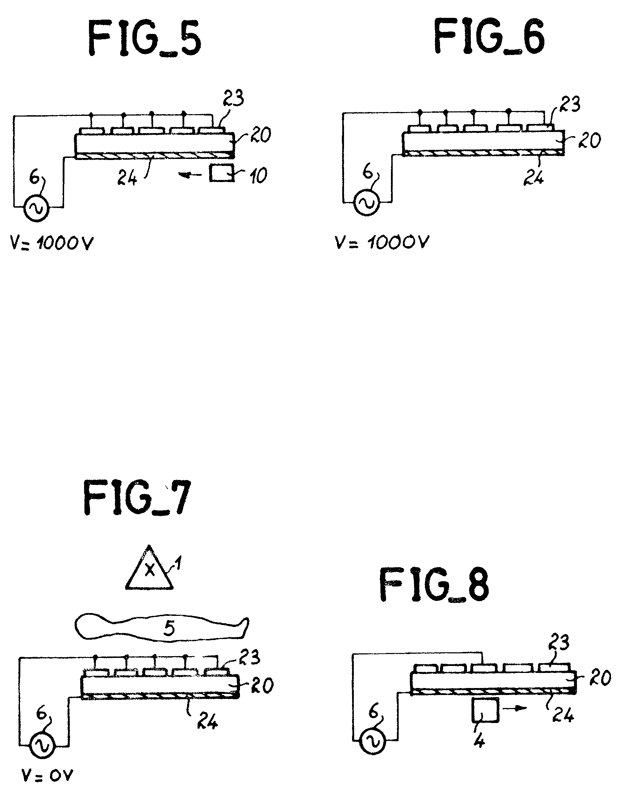

La plaque scintillatrice (ou écran 2) est composée d'un support rigide transparent. Si nous voulons limiter les pertes de résolution nous utiliserons par exemple une galette de fibres optiques. Sur ce support, est déposée une électrode transparente 24 de type oxyde d'étain, oxyde d'indium ou oxyde mixte d'indium et d'étain. Sur la figure 2 on a représenté plusieurs lignes d'électrodes 24, tandis que sur l'exemple de la réalisation représenté par les figures 3 et 4, l'électrode 24 recouvre uniformément une face de la plaque scintillatrice. La couche active 20 du scintillateur à mémoire est composée d'une poudre active enrobée dans un liant transparent à la longueur d'émission du scintillateur et possédant une forte rigidité électrique.

Ce liant peut par exemple être une résine éthoxyline (époxy). La couche active possèdera une épaisseur compatible avec la résolution spatiale souhaitée (50 ou 200 µm), la compacité volumique de la couche pouvant aller jusqu'à 80 %. On recouvre cette couche de lignes d'électrodes métalliques 23 gravées de largeur 200 µm séparées les unes des autres de 10 µm. Le métal utilisé pour les électrodes 23 peut être, par exemple, de l'aluminium.

Il est prévu par ailleurs un circuit d'adressage 16 permettant d'appliquer le champ d'excitation aux électrodes 23 et 24 sous la commande d'un générateur de tension 6.

En ce qui concerne le capteur 4, plusieurs types de détecteurs peuvent être utilisés. Nous avons sélectionné, par exemple, les détecteurs de type CCD, matrice ou barrette de photodiodes. Dans le cas où la géométrie du détecteur n'est pas compatible avec celle de la plaque, on couplera le détecteur à la plaque par l'intermédiaire d'un faisceau de fibres optiques comme cela est représenté sur les figures 3 à 4. Dans l'exemple de réalisation de la figure 2, les détecteurs on été arrangés sous forme matricielle. Les extrémités des fibres placées à proximité de la plaque scintillatrice (ou écran 2) sont alignées selon une rangée de façon à explorer par déplacement, ligne par ligne, la plaque scintillatrice. Les extrémités opposées des fibres sont disposées sous forme matricielle et sont couplées à la matrice de détecteurs.

Sur la figure 3, il s'agit du détecteur et des fibres de couplage 3 qui se déplacent d'une ligne à l'autre sur la face transparente de la plaque scintillatrice pour la lecture en étant entraîné par un moteur pas à pas.

Enfin en ce qui concerne le système de sensibilisation, il est prévu une source de rayonnement. Celle-ci peut être soit une lampe UV intense à grande ouverture telle que l'éclairement soit uniforme sur tout l'écran 2, soit une barrette 10 de type photocopieuse dont la largeur est égale à celle de l'écran 2 et qui se déplace devant celle-ci. Il est à noter que cette sensibilisation est effectuée du côté de l'électrode transparente de l'écran 2.

En se reportant aux figures 5 à 8 on va maintenant décrire un exemple de procédé selon l'invention.

Durant une première étape représentée par la figure 5, une plaque scintillatrice 20 est éclairée par une source lumineuse 10. Par exemple, une barrette de type photocopieuse se déplace devant la plaque scintillatrice du côté électrode transparente 24 alors qu'une tension de quelques centaines de volts est appliquée à l'ensemble de la plaque. Cette tension est appliquée sous forme d'impulsions de polarités toutes identiques ou alternatives.

Le rayonnement émis par la source 10 est tel que sa longueur d'onde est sensiblement dans le spectre caractéristique d'émission du matériau constituant la plaque scintillatrice 20.

Il est à noter que l'application de la tension améliore le fonctionnement du système mais n'est pas indispensable au fonctionnement du système.

Durant une deuxième étape illustrée par la figure 6, on continue à appliquer la tension à l'ensemble de la plaque scintillatrice 20 alors qu'on cesse de l'éclairer avec la source 10 et qu'on la maintient dans l'obscurité. Ceci permet de vider les pièges remplis lors de la première étape.

Au cours d'une troisième étape illustrée par la figure 7, on cesse d'appliquer la tension et on enregistre l'image radiologique en irradiant sous rayons X la plaque du côté électrodes gravées 23, non représentés, à travers le corps 5 à radiographier.

Au cours d'une quatrième étape illustrée par la figure 5, on procède à la lecture de l'enregistrement fait sur la plaque scintillatrice 20. Pour cela, on applique séquentiellement une impulsion de tension à chacune des électrodes métalliques. La polarité de l'impulsion est identique à celle utilisée lors de la sensibilisation et de la remise à zéro. Le coupleur à fibre et sont détecteur ou le détecteur seul se déplacent pas à pas en se plaçant en face de la ligne adressée. Ce déplacement est réalisé du côté électrode transparente 24.

Pour cette lecture, plusieurs autres solutions sont envisageables. Le détecteur peut rester fixe et la plaque scintillatrice se déplacer ; le détecteur et la plaque peuvent rester fixes et seul le faisceau de fibres se déplace alors.

Il est bien évident que la description qui précède n'a été faite qu'à titre d'exemple. Les exemples numériques notamment n'ont été fournis que pour illustrer la description.

D'autres variantes peuvent être envisagées sans sortir du cadre de l'invention.

**Revendications**

1. Système de visualisation à mémoire comprenant
- une première source de rayonnement (1) éclairant, avec un premier faisceau (F1) d'une longueur d'onde déterminée, un corps (5) à explorer ;
- un support (2) sensible à ladite longueur d'onde recevant le faisceau retransmis par le corps (5), et comportant, d'une part, une couche (20) d'un matériau luminophore capable de stocker une énergie, provenant dudit premier faisceau (F1), dans des états métastables et de le libérer sous l'éffet d'une excitation électrique, sous la forme d'un flux lumineux (F2) et, d'autre part, des moyens d'application (23, 24) de ladite excitation électrique au matériau luminophore ;
- un dispositif optique de transmission (3) recevant le flux lumineux (F2) et le retransmettant ;
- un capteur (4) recevant le flux lumineux retransmis par le dispositif optique de transmission (3) et traduisant l'intensité du flux lumineux (F3) en signal électrique;
- un circuit de traitement (8) recevant ledit signal électrique et traitant et commandant son affichage sur un dispositif de visualisation (9); caractérisé en ce qu'il comporte en outre:
- une deuxième source de rayonnement (10) émettant un deuxième faisceau (F4) éclairant la couche (20) de matériau luminophore, la longueur d'onde de ce deuxième faisceau (F4) étant choisie pour créer des paires d'électrons-trous dans la couche (20) de matériau luminophore;
- un circuit de commande CC émettant successivement les différents signaux de commande suivants :

- un premier signal (C1) qui est transmis à la deuxième source de rayonnement (10) pour commander son fonctionnement;

- un troisième signal (C3) qui est transmis à la première source de rayonnement (1) pour commander son fonctionnement;

- un quatrième signal (C4) qui est transmis aux moyens d'application (23, 24) d'excitation électrique, au capteur (4) et au circuit de traitement (8) pour commander leurs fonctionnements respectifs.

2. Système de visualisation à mémoire selon la revendication 1, dans lequel la couche (20) de matériau luminophore est enserrée entre une première plaque (21) transparente au faisceau (F1) de ladite longueur d'one et une deuxième plaque (22) transparente au flux lumineux (F2), les moyens d'application de ladite excitation électrique comportant une première électrode (23) située sur la première plaque et une deuxième électrode (24) située sur la deuxième plaque (22), caractérisé en ce que la deuxième source (10) éclaire la couche (20) de matériau luminophore à travers la deuxième plaque (22).

3. Système de visualisation à mémoire selon la revendication 2, caractérisé en ce que la deuxième source (10) est in tube émetteur de lumière de déplaçant parallèlement à la deuxième plaque (22) de façon à éclairer uniformément la couche (20) de matériau luminophore

4. Système de visualisation à mémoire selon la revendication 1, caractérisé en ce que la deuxième source lumineuse (10) émet un faisceau ultra-violet.

5. Système de visualisation à mémoire selon la revendication 1, caractérisé en ce que le circuit de commande (CC) émet un deuxième signal de commande (C2) qui est transmis aux moyens d'application (23, 24) d'excitation électrique.

6. Système de visualisation à mémoire selon la revendication 5, caractérisé en ce que le deuxième signal de commande (C2) débute en même temps que le premier signal de commande (C1) et a une durée plus longue que le premier signal de commande (C1) de façon que les moyens d'application (23, 24) de l'excitation électrique continuent à appliquer un champ électrique à la couche (20) du matériau luminophore durant un temps déterminé après que ladite couche (20) n'est plus éclairée par le deuxième faisceau (F4).

7. Procédé de sensibilisation d'un système de visualisation comportant une couche (20) d'un matériau luminophore permettant de stocker une énergie provenant d'un premier faisceau (F1) et de la libérer sous l'effet d'une première excitation électrique d'un sens déterminé sous la forme d'un flux lumineux, selon l'une quelconque des revendications précédentes, caractérisé en ce qu'il comporte avant stockage de l'énergie provenant du premier faisceau (F1) une étape d'éclairement de la couche (20) de matériau luminophore à l'aide d'un deuxième faisceau (F4) dont la longueur d'onde permet de créer des paires d'électrons-trous dans ladite couche (20).

8. Procédé selon la revendication 7, caractérisé en ce que le deuxième faisceau (F4) est un faisceau ultra-violet.

9. Procédé selon la revendication 7, caractérisé en ce qu'il comporte durant l'étape d'éclairment de ladite couche (20) une deuxième excitation électrique du matériau luminophore.

10. Procédé selon la revendication 9, caractérisé en ce que la deuxième excitation électrique est de même sens que celui de la première excitation électrique.

11. Procédé selon la revendication 10, caractérisé en ce que la deuxième excitation électique est sensiblement de même valeur que celle de la première excitation électrique.

12. Procédé selon la revendication 9, caractérisé en ce que la deuxième excitation électrique de la couche (20) de matériau luminophore par le deuxième faisceau (F4) est prolongée après l'étape d'éclairement, la couche (20) de matériau luminophore étant dans l'obscurité.

0299813

FIG_1

0299813

FIG_2

ADRESSE

FIG_3

FIG_4

FIG_5

FIG_6

FIG_7

FIG_8

Office européen
des brevets

RAPPORT DE RECHERCHE EUROPEENNE

Numero de la demande

EP 88 40 1461

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | PATENT ABSTRACTS OF JAPAN, vol. 10, no. 157 (P-464)[2213], 6 juin 1986; & JP-A-61 11 685 (FUJITSU K.K.) 20-01-1986 * Résumé * | 1,2,5,6 | G 01 T 1/29 |
| A | Idem<br>--- | 9,10,12 | |
| Y | EP-A-0 092 157 (TOKYO SHIBAURA DENKI K.K.) * Résumé; page 2, lignes 11-27; page 3, ligne 14 - page 6, ligne 4; page 6, ligne 22 - page 7, ligne 13; figures 1,2,5 * | 1,2,5,6 | |
| A | ---<br> | 9,10,12 | |
| A | GB-A-1 466 869 (SECRETARY OF DEFENCE) * Page 1, ligne 75 - page 2, ligne 61; figures *<br>--- | 1,2 | |
| A | US-A-3 803 438 (HANAK) * Colonne 2, ligne 28 - colonne 3, ligne 2; figures *<br>----- | 3,4,8 | DOMAINES TECHNIQUES RECHERCHES (Int. Cl.4)<br><br>G 01 T<br>H 05 B<br>H 01 L<br>G 11 C |

Le présent rapport a été établi pour toutes les revendications

| Lieu de la recherche | Date d'achèvement de la recherche | Examinateur |
|---|---|---|
| LA HAYE | 21-10-1988 | DATTA S. |